# EUROPEAN PATENT APPLICATION

(11) **EP 2 782 207 A1**
(43) Date of publication of application: **24.09.2014**
(21) Application number: 13180762.0
(22) Date of filing: 16.08.2013
(51) Int. Cl.: H02J 7/00, H02J 7/02, H04B 1/38, H04M 1/04

(54) **Protecting device for electronic device**

(30) Priority: 22.03.2013 TW 102205339
(71) Applicant: Primax Electronics Ltd, Taipei (TW)
(72) Inventor: Chen, Chih Hung, Taiwan, ROC Taipei (TW)
(74) Representative: Rees, Simon John Lewis

(57) **Abstract**

A protecting device for an electronic device is provided. The protecting device includes a first main body (41) and a second main body (42). The first main body has a closed receiver coil for contactless receiving electric power from a wireless power transmission device. The second main body is connected with the first main body, and slidable and swingable relative to the first main body. After the electronic device is stored in the protecting device, the second main body may be slid and swung relative to the first main body in order to expose a connecting port (50) of the electronic device, here iPhone power connection port. Consequently, a connecting jack at the end of a wire may be plugged into the connecting port.

## Description

### FIELD OF THE INVENTION

The present invention relates to a protecting device, and more particularly to a protecting device for an electronic device.

### BACKGROUND OF THE INVENTION

With increasing development of science and technology, a variety of commercially-available electronic devices are developed toward small size, light weightiness and easy portability. Consequently, these electronic devices can be easily carried. Generally, the electronic device has a touch screen. Via the touch screen, the user can input command into the electronic device in order to control the electronic device. For example, the electronic device is a smart phone, a tablet personal computer, a personal digital assistant or a handheld game console. However, since the light and slim electronic device can only withstand a small impact, the touch screen of the electronic device is readily damaged. If the touch screen of the electronic device is damaged, the operability of the electronic device is deteriorated. In other words, it is very important to protect the electronic device.

On the other hand, the electronic device usually has a built-in chargeable battery for providing electric power to operate the electronic device. When quantity of electricity of the chargeable battery of the electronic device is insufficient, the chargeable battery may receive the electronic power through a connecting wire. The connecting wire has two ends. A first end of the connecting wire is connected with a power source and a second end of the connecting wire is plugged into the electronic device, the electric power may be transmitted from the power source to the electronic device through the connecting wire in order to charge the chargeable battery. However, the above wired charging technology still has some drawbacks. For example, since the connecting wire is exposed outside the electronic device, it is difficult to manage the connecting wire. Moreover, if the connecting wire or another connecting cable (e.g. an audio signal connecting wire or a headphone cable) is carelessly pulled by the user, the connecting wire or the connecting cable is readily damaged.

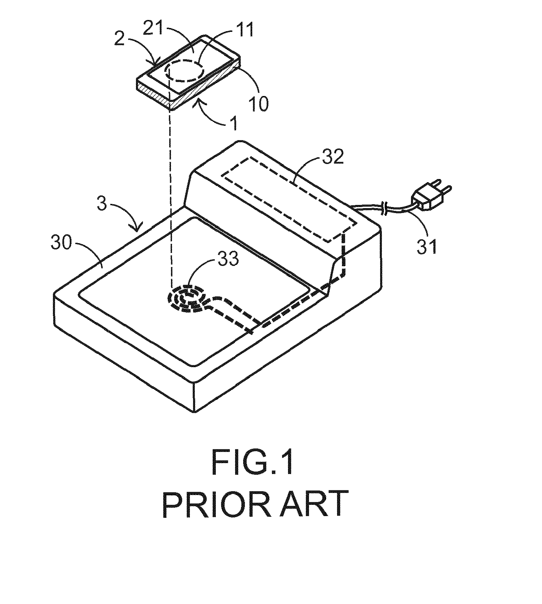

For solving the above two drawbacks, a conventional protecting device for an electronic device is introduced into the market. FIG. 1 schematically illustrates the relationship between a protecting device for an electronic device and a wireless power transmission device according to the prior art. In FIG. 1, the protecting device 1, the electronic device 2 and the wireless power transmission device 3 are shown. The protecting device 1 comprises a main body 10, a chargeable battery (not shown), and a closed receiver coil 11. The main body 10 is used for covering the electronic device 2 in order to protect the electronic device 2, wherein a display screen 21 of the electronic device 2 is exposed outside the electronic device 2. The closed receiver coil 11 is disposed within the main body 10. Moreover, the closed receiver coil 11 is electrically connected with the chargeable battery in order to receive the electric power from the wireless power transmission device 3 and transfer the electric power to the chargeable battery.

The wireless power transmission device 3 comprises a housing 30, a power cable 31, a power module 32, and a transmitter coil 33. The power cable 31 is exposed outside the housing 30 to be connected with a power source (not shown). The power module 32 and the transmitter coil 33 are both disposed within the housing 30. In addition, the power module 32 is connected with the power cable 31 and the transmitter coil 33. After the power module 32 is driven by the power source, the power module 32 generates an electric current. The electric current may flow through the transmitter coil 33 to result in an electromagnetic effect. In response to the magnetic flux generated by the electromagnetic effect, the transmitter coil 33 correspondingly outputs electric power to the closed receiver coil 11. Generally, for placing the protecting device 1 on the wireless power transmission device 3, the housing 30 of the wireless power transmission device 3 is designed to have a platform-like profile, and the volume of the housing 30 of the wireless power transmission device 3 is larger than the volume of the main body 10 of the protecting device 1.

From the above discussions, the conventional protecting device 1 is capable of protecting the electronic device 2 from being damaged by the external impact. Moreover, the conventional protecting device 1 plays a roll in charging the electronic device 2 according to a wireless charging technology. Although the electronic device 2 can be wirelessly charged without the need of using a connecting wire, the connecting wire is also needed to communicate the electronic device 2 with a computer system (not shown) in order to transfer data or backup data. Since the connecting port of the electronic device 2 to be plugged by the connecting wire is covered by the protecting device 1, the protecting device 1 is detrimental to the connection between the connecting port and the connecting wire. If the user wants to communicate the electronic device 2 with the computer system through the connecting wire, the electronic device 2 should be removed from the protecting device 1. Under this circumstance, the connecting port of the electronic device 2 is exposed outside, and thus the connecting wire can be plugged into the connecting port. However, during the process of removing the electronic device 2 from the protecting device 1, since the electronic device 2 fails to be protected by the protecting device 1, the electronic device 2 is readily dropped down and subj ected to a strong impact.

Therefore, there is a need of providing an improved protecting device for an electronic device. In particular, the protecting device is capable of assisting in plugging a connecting wire into a connecting port of the electronic device and capable of protecting the electronic device during the connecting wire is plugged into the electronic device.

### SUMMARY OF THE INVENTION

The present invention provides a protecting device for an electronic device in order to facilitate plugging a connecting wire into the electronic device.

In accordance with an aspect of the present invention, there is provided a protecting device for an electronic device. The protecting device includes a first main body and a second main body. The first main body is used for partially covering the electronic device. The first main body includes a closed receiver coil. The closed receiver coil is disposed within the first main body for receiving electric power from a wireless power transmission device. The second main body is used for covering a first connecting port of the electronic device. The second main body is connected with the first main body, and slidable and swingable relative to the first main body. When the second main body is slid relative to the first main body in a first direction, the second main body is separated from the electronic device. When the second main body is slid relative to the first main body in the first direction and swung relative to the first main body, an included angle is formed between the second main body and the first main body, and the first connecting port of the electronic device is exposed outside.

The above objects and advantages of the present invention will become more readily apparent to those ordinarily skilled in the art after reviewing the following detailed description and accompanying drawings, in which:

### BRIEF DESCRIPTION OF THE DRAWINGS

FIG. 1 schematically illustrates the relationship between a protecting device for an electronic device and a wireless power transmission device according to the prior art;

FIG. 2 schematically illustrates the relationship between a protecting device and an electronic device according to an embodiment of the present invention, in which the protecting device and the electronic device are separated from each other;

FIG. 3 schematically illustrates the relationship between the protecting device and the electronic device according to the embodiment of the present invention, in which a second main body of the protecting device is slid relative to a first main body of the protecting device;

FIG. 4 schematically illustrates the relationship between the protecting device and the electronic device as shown in FIG. 3 and taken along another viewpoint;

FIG. 5 schematically illustrates the relationship between the protecting device and the electronic device according to the embodiment of the present invention, in which the electronic device is stored within the protecting device;

FIG. 6 schematically illustrates a movable lid of the protecting device for the electronic device according to the embodiment of the present invention, in which the movable lid is opened;

FIG. 7 schematically illustrates the movable lid of the protecting device for the electronic device according to the embodiment of the present invention, in which the movable lid is closed;

FIG. 8 schematically illustrates the relationship between the protecting device and the electronic device according to the embodiment of the present invention, in which the second main body is swung relative to the first main body; and

FIG. 9 schematically illustrates the relationship between the protecting device and the electronic device according to the embodiment of the present invention, in which the electronic device is connected with a second connecting wire.

### DETAILED DESCRIPTION OF THE PREFERRED EMBODIMENT

For eliminating the drawbacks from the prior art, the present invention provides a protecting device for an electronic device.

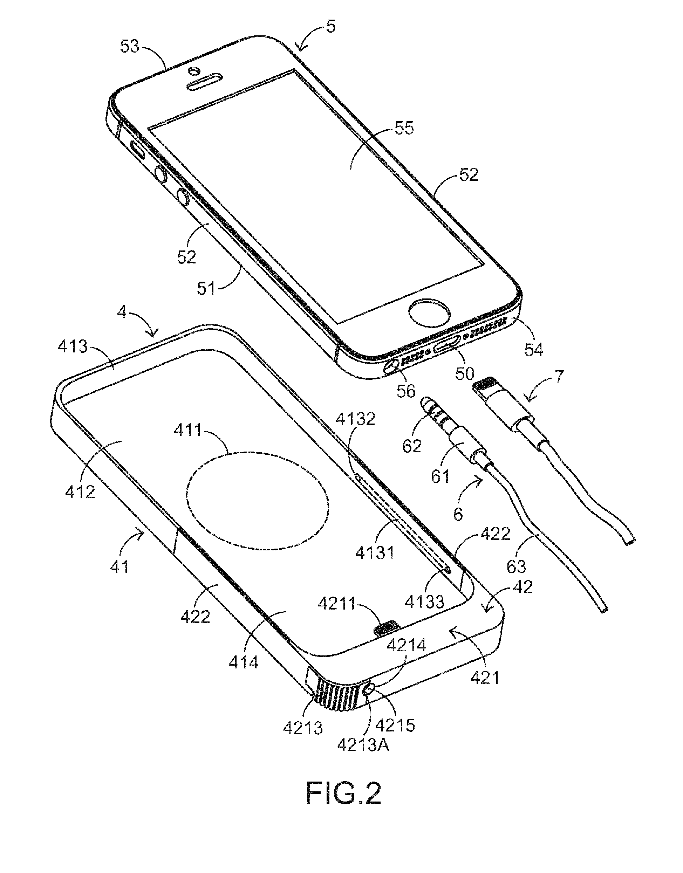

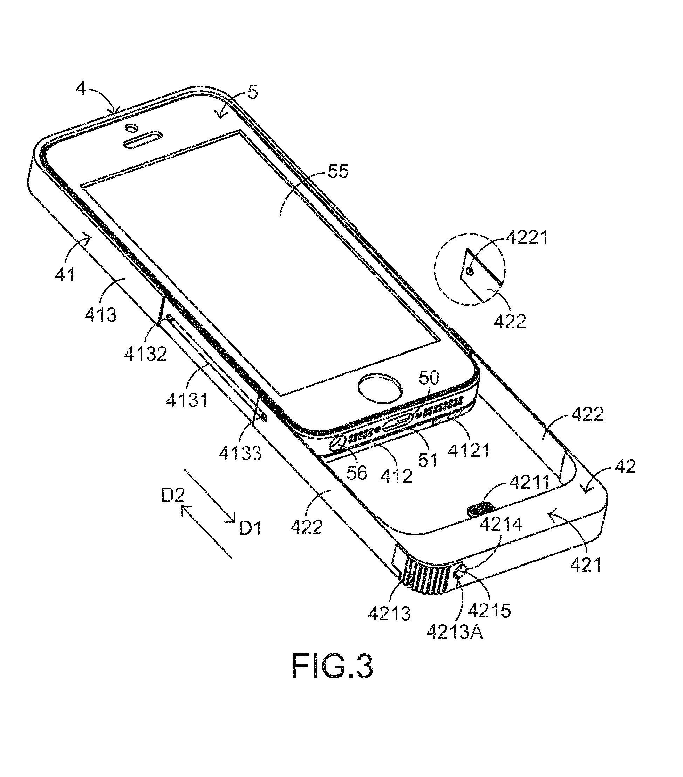

Please refer to FIGS. 2 and 3. FIG. 2 schematically illustrates the relationship between a protecting device and an electronic device according to an embodiment of the present invention, in which the protecting device and the electronic device are separated from each other. FIG. 3 schematically illustrates the relationship between the protecting device and the electronic device according to the embodiment of the present invention, in which a second main body of the protecting device is slid relative to a first main body of the protecting device. In FIG. 2, a protecting device 4 and an electronic device 5 are shown. The protecting device 4 comprises a first main body 41 and a second main body 42. The first main body 41 is used for partially covering the electronic device 5. The second main body 42 is connected with the first main body 41, and slidable relative to the first main body 41. After the second main body 42 is slid relative to the first main body 41 in the direction away from the first main body 41, the second main body 42 can be swung relative to the first main body 41. Consequently, a first connecting port 50 of the electronic device 5 is exposed outside.

The electronic device 5 comprises a bottom surface 51, plural long lateral walls 52, a first short lateral wall 53, a second short lateral wall 54, a display screen 55, and a second connecting port 56. The plural long lateral walls 52 are in parallel with each other. The plural long lateral walls 52 are connected with the first short lateral wall 53 and the second short lateral wall 54, respectively. The first short lateral wall 53 and the second short lateral wall 54 are in parallel with each other. The first connecting port 50 is located at a middle region of the second short lateral wall 54 in order to be connected with a second connecting wire 7. The second connecting port 56 is also located at the second short lateral wall 54 and located beside the first connecting port 50 in order to be connected with a first connecting wire 6. In this embodiment, the electronic device 5 is a smart phone, and the display screen 55 is a touch screen. Alternatively, in some other embodiment, the electronic device is a tablet personal computer, a personal digital assistant or a handheld game console.

Please refer to FIGS. 2 and 3 again. The first main body 41 comprises a closed receiver coil 411, a base plate 412, a first lateral plate 413, and a storing space 414. The closed receiver coil 411 is disposed within the base plate 412 of the first main body 41 for receiving electric power from a transmitter coil (not shown) of a power transmission device (not shown). The base plate 412 is used for accommodating the closed receiver coil 411. In addition, the base plate 412 is contacted with the bottom surface 51 of the electronic device 5. The first lateral plate 413 is extended from the base plate 412 in order to be contacted with at least one lateral wall of the electronic device 5. The at least one lateral wall of the electronic device 5 includes the plural long lateral walls 52 and the first short lateral wall 53. The storing space 414 is defined by the first lateral plate 413 and the base plate 412 collaboratively. The storing space 414 is used for storing the electronic device 5. In this embodiment, the first lateral plate 413 has an inverted-U shape. Moreover, the first lateral plate 413 is integrally formed with the base plate 412.

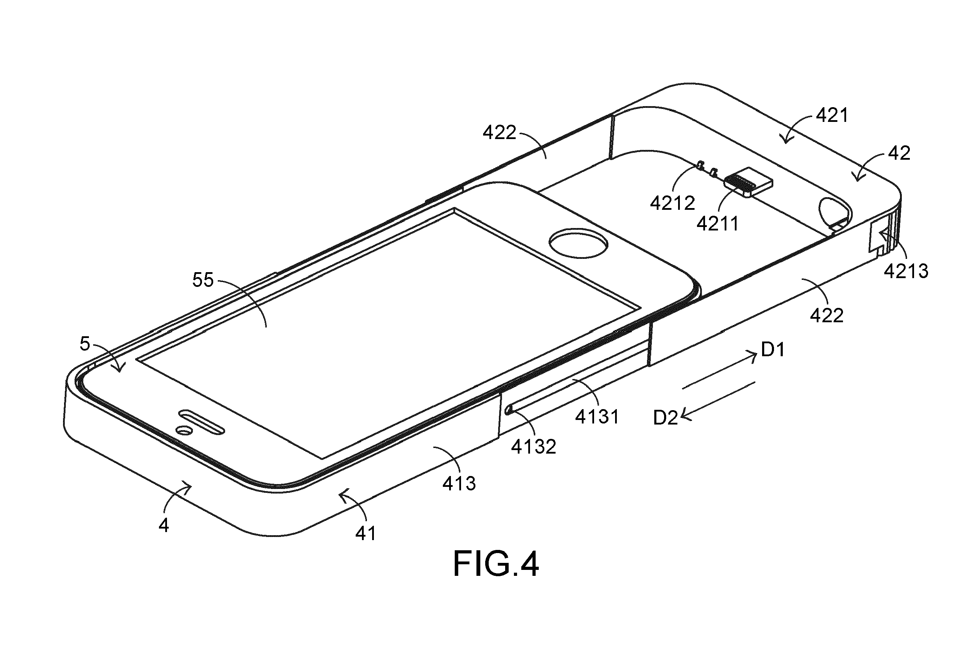

FIG. 4 schematically illustrates the relationship between the protecting device and the electronic device as shown in FIG. 3 and taken along another viewpoint. Please refer to FIGS. 3 and 4. The second main body 42 comprises a frame body 421 and plural extension arms 422. The shape of the frame body 421 matches the first short lateral wall 53 of the electronic device 5. Moreover, the frame body 421 comprises a connecting part 4211. When the frame body 421 is contacted with the first short lateral wall 53 of the electronic device 5, the connecting part 4211 is inserted into the first connecting port 50 of the electronic device 5. The plural extension arms 422 are extended from the frame body 421, and connected with the first lateral plate 413 of the first main body 41. Moreover, the plural extension arms 422 are slidable relative to the first lateral plate 413, and swingable relative to the first lateral plate 413. As shown in FIGS. 3 and 4, the base plate 412 comprises a first transmission element 4121. The first transmission element 4121 is disposed on the base plate 412, and electrically connected with the closed receiver coil 411. Moreover, the frame body 421 further comprises a second transmission element 4212. The second transmission element 4212 is disposed on the frame body 421, and electrically connected with the connecting part 4211. In this embodiment, the plural extension arms 422 are integrally formed with the frame body 421, and the first transmission element 4121 and the second transmission element 4212 are resilient metal sheets.

In the first main body 41, the first lateral plate 413 comprises a guiding track 4131, a first opening 4132, and a second opening 4133. The guiding track 4131 is formed in the first lateral plate 413, and arranged between a middle region of the first lateral plate 413 and an edge region of the first lateral plate 413. The first opening 4132 is formed in the first lateral plate 413, and located at a first end of the guiding track 4131. The second opening 4133 is formed in the first lateral plate 413, and located at a second end of the guiding track 4131. Each of the plural extension arms 422 has a protrusion rod 4221 to be selectively inserted into the first opening 4132, the second opening 4133 or the guiding track 4131. In FIG. 3, only the guiding track 4131, the first opening 4132 and the second opening 4133 at a side of the first lateral plate 413 are shown. It is noted that the guiding track 4131, the first opening 4132 and the second opening 4133 are also formed at another side of the first lateral plate 413.

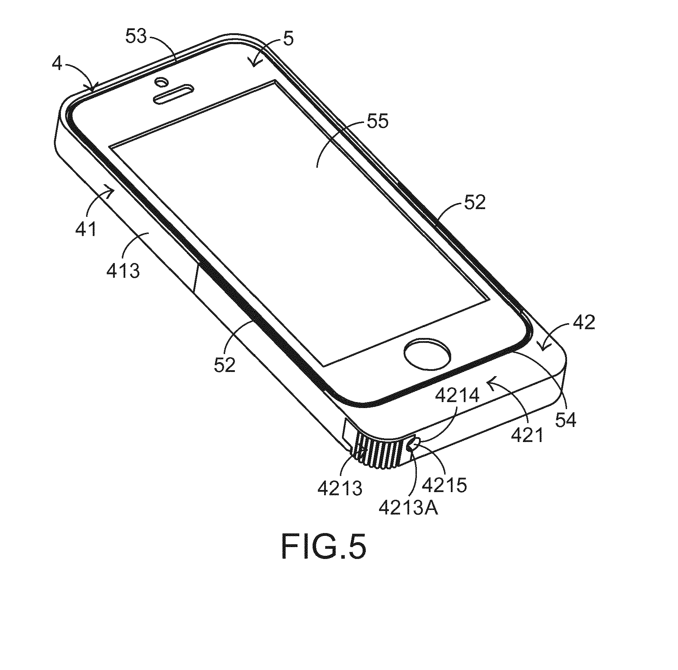

In case that the protrusion rod 4221 is inserted into the first opening 4132, the first main body 41 is near the second main body 42. Under this circumstance, the resulting structure defined by the storing space 414 of the first main body 41 and the frame body 421 of the second main body 42 may match the profile of the electronic device 5, and the connecting part 4211 is disposed over the storing space 414 (see FIG. 2). In case that the protrusion rod 4221 is inserted into the second opening 4133, the first main body 41 and the frame body 421 are away from each other, and the connecting part 4211 is away from the storing space 414 (see FIG. 3). Under this circumstance, the electronic device 5 can be stored within the storing space 414 by the user. After the electronic device 5 is stored within the storing space 414, the user may push the frame body 421 of the second main body 42, so that the second main body 42 is slid relative to the first main body 41 in a second direction D2. The second direction D2 is reverse to the first direction D1. Under this circumstance, the protrusion rod 4221 is detached from the second opening 4133, so that the protrusion rod 4221 is moved along the guiding track 4131. At the same time, the second main body 42 is still separated from the electronic device 5. When the protrusion rod 4221 is moved to the first opening 4132 and inserted into the first opening 4132, the frame body 421 is contacted with the electronic device 5, and the connecting part 4211 is inserted into the first connecting port 50 of the electronic device 5 and electrically connected with the electronic device 5. Under this circumstance, the electronic device 5 is stored within the storing space 414, the bottom surface 51 of the electronic device 5 is contacted with the base plate 412, and the plural long lateral walls 52 and the first short lateral wall 53 are contacted with the first lateral plate 413 (see FIG. 5).

After the frame body 421 is contacted with the electronic device 5 and the connecting part 4211 is inserted into the first connecting port 50 of the electronic device 5, the first transmission element 4121 and the second transmission element 4212 are contacted with each other. Consequently, the electric power from the wireless power transmission device is transmitted from the closed receiver coil 411 to the electronic device 5 through the first transmission element 4121, the second transmission element 4212 and the connecting part 4211. Under this circumstance, the electrical connection between the closed receiver coil 411 and the electronic device 5 is established.

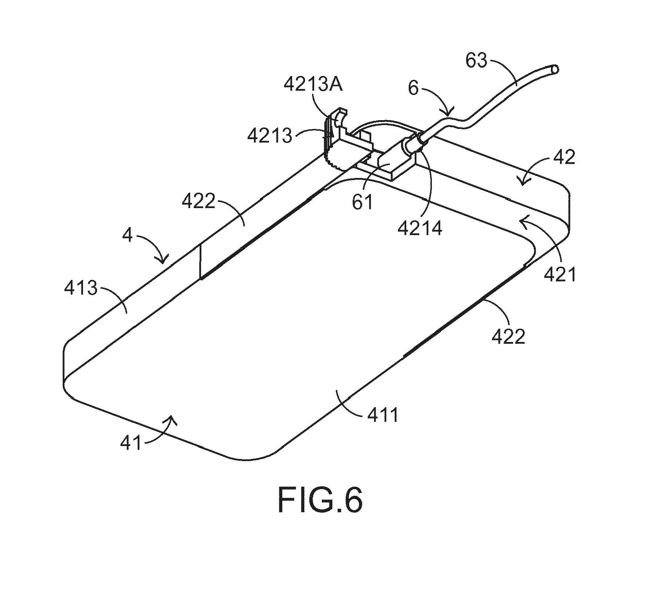

FIG. 6 schematically illustrates a movable lid of the protecting device for the electronic device according to the embodiment of the present invention, in which the movable lid is opened. As shown in FIG. 6, the frame body 421 further comprises a movable lid 4213. The movable lid 4213 is located at a peripheral region of the frame body 421. The movable lid 4213 may be rotated relative to the frame body 421 so as to expose the second connecting port 56 of the electronic device 5, or the movable lid 4213 may be rotated relative to the frame body 421 so as to be closed on the frame body 421. In case that the movable lid 4213 is rotated relative to the frame body 421 to expose the second connecting port 56 of the electronic device 5, the first connecting wire 6 can be plugged into the second connecting port 56. As shown in FIG. 6, the movable lid 4213 comprises a movable lid notch 4213A, and the frame body 421 comprises a frame body notch 4214. When the movable lid 4213 is closed on the frame body 421, the movable lid notch 4213A and the frame body notch 4214 are collaboratively defined as a frame body perforation 4215 (see FIG. 2). Especially, the diameter of the frame body perforation 4215 is smaller than the diameter of the second connecting port 56.

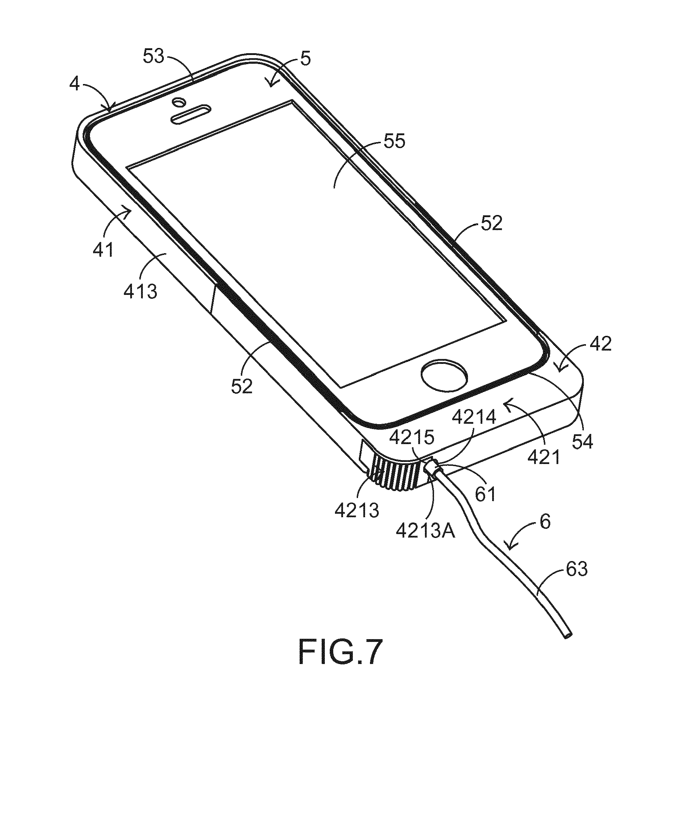

FIG. 7 schematically illustrates the movable lid of the protecting device for the electronic device according to the embodiment of the present invention, in which the movable lid is closed. Please refer to FIGS. 2, 6 and 7. The first connecting wire 6 comprises a holding part 61, a connector 62, and a wire part 63. By holding the holding part 61, the first connecting wire 6 may be plugged into the second connecting port 56. The connector 62 is disposed on a first end of the holding part 61 so as to be plugged into the second connecting port 56. The wire part 63 is disposed on a second end of the holding part 61 for transferring a signal from the electronic device 5. For example, the signal from the electronic device 5 is an audio source signal, and the first connecting wire 6 is an audio signal connecting wire. When the connector 62 of the first connecting wire 6 is plugged into the second connecting port 56 and the movable lid 4213 is closed on the frame body 421, the holding part 61 of the first connecting wire 6 is sheathed by the frame body perforation 4215. Consequently, the holding part 61 of the first connecting wire 6 is fixed on the frame body 421 by the movable lid 4213. At the same time, the wire part 63 is penetrated through the frame body perforation 4215. That is, the second end of the holding part 61 is fixed in the frame body perforation 4215. Under this circumstance, even if the first connecting wire 6 is carelessly pulled by the user, the first connecting wire 6 can be securely fixed on the frame body 421 without being detached from the second connecting port 56.

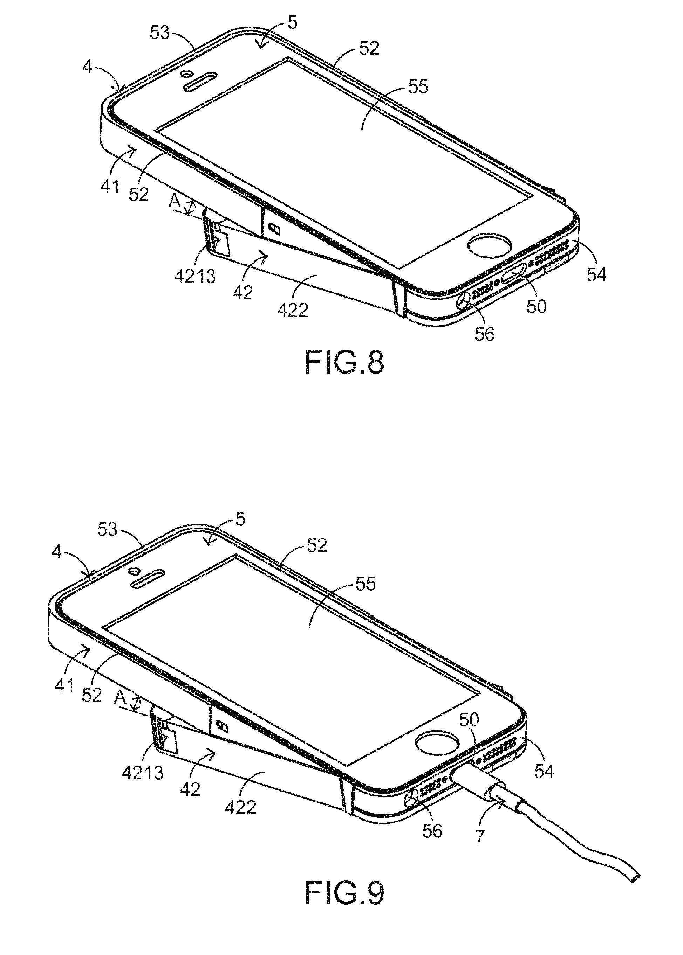

Hereinafter, a process of plugging the second connecting wire 7 into the first connecting port 50 of the electronic device 5 will be illustrated with reference to FIGS. 3 and 8. FIG. 8 schematically illustrates the relationship between the protecting device and the electronic device according to the embodiment of the present invention, in which the second main body is swung relative to the first main body. When the user wants to connect the electronic device 5 with a computer system (not shown) through the second connecting wire 7, the second main body 42 is firstly pulled out and then the second main body 42 is slid relative to the first main body 41. The way of allowing the second main body 42 to be slid relative to the first main body 41 has been mentioned above, and is not redundantly described herein. After the second main body 42 is pulled out and slid relative to the first main body 41, the operating status of the protecting device 4 is shown in FIG. 3. After the protrusion rod 4221 is inserted into the second opening 4133, the second main body 42 is away from the first main body 41. Consequently, the second main body 42 is swingable relative to the first main body 41 by using the protrusion rod 4221 as a pivot shaft. Under this circumstance, an included angle A is formed between the second main body 42 and the first main body 41. In this embodiment, the included angle A is an acute angle. Consequently, the first connecting port 50 of the electronic device 5 is exposed outside (see FIG. 8).

After the first connecting port 50 of the electronic device 5 is exposed outside, a first end of the second connecting wire 7 may be plugged into the first connecting port 50 of the electronic device 5 (see FIG. 9), and a second end of the second connecting wire 7 may be plugged into the computer system. Consequently, the communication between the electronic device 5 and the computer system is established. Moreover, as shown in FIG. 8, after the first connecting port 50 of the electronic device 5 is exposed outside, the electronic device 5 is still fixed in the storing space 414 of the first main body 41, and thus the electronic device 5 is protected by the protecting device 4. That is, even if the electronic device 5 is carelessly dropped down and subjected to a strong impact, the possibility of causing damage of the electronic device 5 is minimized because a large portion of the electronic device 5 is covered by the protecting device 4.

Moreover, after the included angle A is formed between the second main body 42 and the first main body 41, the protecting device 4 may be placed on a desk surface (not shown). Since there is the included angle A between the second main body 42 and the first main body 41, the display screen 55 of the electronic device 5 which is stored in the protecting device 4 is tilted relative to the desk surface at an angle substantially equal to the included angle A. Under this circumstance, the user can watch the display screen 55 while operating the electronic device 5.

From the above description, the present invention provides a protecting device for an electronic device. In addition to a wireless charging function, the protecting device of the present invention also provides the function of protecting the electronic device. By simply sliding a second main body away from a first main body and swinging the second main body relative to the first main body, the first connecting port of the electronic device is exposed outside, so that the second connecting wire can be plugged into the electronic device,. Under this circumstance, the electronic device is still protected by the first main body, and thus the possibility of causing damage of the electronic device in response to the external impact will be minimized. On the other, even if the first connecting wire is carelessly pulled by the user, the first connecting wire can be securely fixed by the protecting device of the present invention without being detached from the second connecting port.

While the invention has been described in terms of what is presently considered to be the most practical and preferred embodiments, it is to be understood that the invention needs not be limited to the disclosed embodiments. On the contrary, it is intended to cover various modifications and similar arrangements included within the spirit and scope of the appended claims which are to be accorded with the broadest interpretation so as to encompass all such modifications and similar structures.

## Claims

1. A protecting device for an electronic device, said protecting device comprising:
a first main body for partially covering said electronic device, wherein said first main body comprises a closed receiver coil, and said closed receiver coil is disposed within said first main body for receiving electric power from a wireless power transmission device; and
a second main body for covering a first connecting port of said electronic device, wherein said second main body is connected with said first main body, and slidable and swingable relative to said first main body, wherein when said second main body is slid relative to said first main body in a first direction, said second main body is separated from said electronic device, wherein when said second main body is slid relative to said first main body in said first direction and swung relative to said first main body, an included angle is formed between said second main body and said first main body, and said first connecting port of said electronic device is exposed outside.

2. The protecting device according to claim 1, wherein said first main body comprises:
a base plate, wherein said closed receiver coil is disposed within said base plate, and said base plate is contacted with a bottom surface of said electronic device;
a first lateral plate extended from said base plate so as to be contacted with at least one lateral wall of said electronic device; and
a storing space for storing said electronic device, wherein said storing space is defined by said first lateral plate and said base plate collaboratively.

3. The protecting device according to claim 2, wherein said second main body comprises:
a frame body comprising a connecting part, wherein when said frame body is contacted with said electronic device, said connecting part is inserted into said first connecting port of said electronic device; and
at least one extension arm extended from said frame body, wherein said at least one extension arm is slidable relative to said first lateral plate and swingable relative to said first lateral plate.

4. The protecting device according to claim 3, wherein said first lateral plate comprises:
a guiding track formed in said first lateral plate, and arranged between a middle region of said first lateral plate and an edge region of said first lateral plate;
a first opening formed in said first lateral plate, and located at a first end of said guiding track; and
a second opening formed in said first lateral plate, and located at a second end of said guiding track,
wherein said at least one extension arm has at least one protrusion rod to be selectively inserted into said first opening, said second opening or said guiding track, wherein when said protrusion rod is inserted into said first opening, said frame body of said second main body is contacted with said electronic device, and said connecting part is electrically connected with said electronic device, wherein when said protrusion rod is inserted into said guiding track, said second main body is separated from said electronic device, and said second main body is slidable relative to said first main body in said first direction or in a second direction reverse to said first direction, wherein when said protrusion rod is inserted into said second opening, said second main body is swingable relative to said first main body by using said protrusion rod as a pivot shaft.

5. The protecting device according to claim 3, wherein said frame body further comprises a movable lid, and said movable lid is located at a peripheral region of said frame body, wherein when said movable lid is rotatable relative to said frame body, a second connecting port of said electronic device is exposed or said movable lid is closed on said frame body.

6. The protecting device according to claim 5, wherein said movable lid comprises a movable lid notch, and said frame body comprises a frame body notch, wherein when said movable lid is closed on said frame body, said movable lid notch and said frame body notch are collaboratively defined as a frame body perforation, and a diameter of said frame body perforation is smaller than a diameter of said second connecting port, wherein when said first connecting wire is plugged into said second connecting port and said movable lid is closed on said frame body, said first connecting wire is penetrated through said frame body perforation, and said first connecting wire is fixed on said frame body by said movable lid.

7. The protecting device according to claim 6, wherein said first connecting wire comprises:
a holding part, wherein by holding said holding part, said first connecting wire is permitted to be plugged into said second connecting port;
a connector disposed on a first end of said holding part so as to be plugged into said second connecting port; and
a wire part disposed on a second end of said holding part for transferring a signal from said electronic device, wherein when said first connecting wire is fixed on said frame body by said movable lid, said second end of said holding part is fixed in said frame body perforation.

8. The protecting device according to claim 3, wherein said base plate further comprises a first transmission element, and said first transmission element is disposed on said base plate and electrically connected with said closed receiver coil, wherein said frame body further comprises a second transmission element, and said second transmission element is disposed on said frame body and electrically connected with said connecting part, wherein when said frame body is contacted with said electronic device, said first transmission element and said second transmission element are contacted with each other, so that said electric power from said wireless power transmission device is transmitted from said closed receiver coil to said electronic device through said first transmission element, said second transmission element and said connecting part.

9. The protecting device according to claim 3, wherein said first lateral plate is integrally formed with said base plate, and said at least one extension arm is integrally formed with said frame body, wherein said electronic device is a smart phone, a tablet personal computer, a personal digital assistant or a handheld game console.

10. The protecting device according to claim 2, wherein when said electronic device is stored within said storing space, said bottom surface of said electronic device is contacted with said base plate, and said at least one lateral wall of said electronic device is contacted with said first lateral plate, wherein said first connecting port is located at a second short lateral wall of said electronic device, wherein said at least one lateral wall of said electronic device includes plural long lateral walls of said electronic device and said first short lateral wall of said electronic device.
